(19) Europäisches Patentamt
European Patent Office
Office européen des brevets

(11) **EP 3 321 053 B1**

(12) **EUROPEAN PATENT SPECIFICATION**

(45) Date of publication and mention
of the grant of the patent:
**26.05.2021 Bulletin 2021/21**

(21) Application number: **16821251.2**

(22) Date of filing: **24.06.2016**

(51) Int Cl.:
**B29B 7/18** *(2006.01)*     B29B 7/24 *(2006.01)*
**B29B 7/74** *(2006.01)*

(86) International application number:
**PCT/JP2016/068758**

(87) International publication number:
**WO 2017/006782 (12.01.2017 Gazette 2017/02)**

(54) **SEALED KNEADING MACHINE**

ABGEDICHTETE KNETMASCHINE

MACHINE DE MALAXAGE SCELLÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.07.2015 JP 2015135502**

(43) Date of publication of application:
**16.05.2018 Bulletin 2018/20**

(73) Proprietor: **Nihon Spindle Manufacturing Co., Ltd.
Hyogo 661-8510 (JP)**

(72) Inventors:
• **IRIE Makoto
Amagasaki-shi
Hyogo 661-8510 (JP)**

• **FUKUDA Hiroyuki
Amagasaki-shi
Hyogo 661-8510 (JP)**

(74) Representative: **Louis Pöhlau Lohrentz
Patentanwälte
Postfach 30 55
90014 Nürnberg (DE)**

(56) References cited:
**EP-A1- 1 352 725      JP-A- 2002 120 221
JP-A- 2007 130 953      JP-A- 2007 130 953
JP-A- 2014 039 899      JP-A- 2014 039 899
US-A1- 2002 163 852     US-A1- 2015 036 449**

**Description**

Technical Field

The present invention relates to a sealed kneading machine including a kneading tank that stores a kneading material, and a pair of rotors disposed within the kneading tank.

Sealed kneading machines are known as apparatuses that kneads a viscous material, such as plastics or rubber. For example, PTL 1 discloses a sealed kneading machine including a chamber that stores a kneading material, a pressurizing lid that closes an upper part of the chamber, and a pair of rotors attached within the chamber.

In the sealed kneading machine, each rotor includes rotor vanes that are formed up to a substantial center of a rotor shaft part from end parts on both sides of the rotor shaft part toward the other end sides, the rotor vanes are of a tangential type in which the rotor vanes do not overlap each other between the rotors that face each other, the ratio of the radius of the rotor shaft to the radius of an inner face of a chamber is set 0.65 or more, a gap between an outer peripheral surface of the rotor shaft part and an inner wall surface of the chamber is set to 35% or less of the radius of the inner face of the chamber, and the ratio of the land width of the rotor vane to the radius of the rotor shaft part is set to 0.25 or less. Accordingly, in the sealed kneading machine of PTL 1, the temperature rise of the kneading material is reduced to a vulcanizing agent system addition allowable temperature or lower by increasing the cooling surface area of the rotor shaft part in contact with the kneading material.

Additionally, by making the ratio of the land width of the rotor vane to the radius of the rotor shaft part smaller than the related-art kneading machine, it is possible to suppress generation of heat of the kneading material caused in the inner wall surface of the chamber and a land portion of the rotor vane, and it is possible to widen the range of the inclination angle of the rotor vane related to the biting property of the kneading material and kneading performance. Moreover, by setting the gap between the outer peripheral surface of the rotor shaft part and the inner wall surface of the chamber to 35% or less of the radius of the inner face of the chamber, it is possible to make the thickness of the kneading material as small as possible, and to sufficiently cool the kneading material up to the inside thereof. That is, in the sealed kneading machine of PTL 1, the structure of the rotor and the inner wall of the chamber has been devised for the purpose of suppressing the temperature rise of the kneading material.

Further reference is made to document JP 2007 130953 A.

Citation List

[PTL 1] Specification of Japanese Patent No. 3574618, corresponding to European Patent Application EP 1 352725 A1.

Summary of Invention

The inventors have conducted studies from a viewpoint different from the sealed kneading machine described in PTL 1 in order to further improve the sealed kneading machine. The inventors have succeeded in enhancing dispersion capability and time efficiency during kneading by devising the structure of the rotor shaft, the rotor vanes, and the kneading tank. That is, an object of the invention is to provide a sealed kneading machine that further enhances dispersion capability and time efficiency during kneading.

The characteristic configuration of a sealed kneading machine according to claim 1 for achieving the above object lies in a sealed kneading machine including a kneading tank that stores a kneading material, and a pair of rotors disposed within the kneading tank. The rotor has a cylindrical rotor shaft and rotor vanes formed on a surface of the rotor shaft, and the rotor vanes are of a tangential type in which the rotor vanes do not overlap each other between the pair of rotors that face each other. A shear deformation velocity ratio, which is a value obtained by dividing a vane distal end shear deformation velocity by a shaft surface shear deformation velocity, is 5 or more and 40 or less, where the vane distal end shear deformation velocity at a distal end of each rotor vane when a kneading material is kneaded by rotating each rotor is defined as a value obtained by dividing a turning velocity of the distal end of the rotor vane by a distance between the distal end of the rotor vane and an inner face of the kneading tank, and the shaft surface shear deformation velocity on the surface of the rotor shaft is defined as a value obtained by dividing a turning velocity of the surface of the rotor shaft by a distance between the surface of the rotor shaft and the inner face of the kneading tank.

The inventors have experimentally found out that it is important to perform kneading that occurs between the distal end of the rotor vane and the inner face of the kneading tank, and kneading that occurs between the rotor shaft surface and the inner face of the kneading tank in a well-balanced manner, in order to enhance dispersion capability and time efficiency during kneading, as a result of keen examination. It was also confirmed by experiments that the capability and efficiency of the kneading are improved compared to the related-art apparatus in a case where a parameter that is a shear deformation velocity ratio newly found as a result of further experiment and discussion is 5 or more and 40 or less.

That is, according to the above characteristic configuration, it was possible to enhance the dispersion capability and the time efficiency during kneading by setting the shear deformation velocity ratio, which is the value obtained by dividing the vane distal end shear deformation velocity by the shaft surface shear deformation velocity, to 5 or more and 40 or less, where the vane distal end shear deformation velocity at the distal end of the rotor vane when the kneading material is kneaded by rotating the rotor is the value obtained by dividing the turning velocity of the distal end of the rotor vane by the distance between the distal end of the rotor vane and the inner face of a kneading tank, and the shaft surface shear deformation velocity on the surface of the rotor shaft is the value obtained by dividing the turning velocity of the surface of the rotor shaft by the distance between the surface of the rotor shaft and the inner face of the kneading tank.

Another characteristic configuration of the sealed kneading machine related to the invention lies in that a diameter of the rotor shaft is 0.65 times or more and 0.80 times or less a diameter of the inner face of the kneading tank.

According to the above characteristic configuration, the diameter of the rotor shaft is 0.65 times or more and 0.80 times or less the diameter of the inner face of the kneading tank. Thus, kneading capacity that is the space volume between the rotor and the kneading tank inner face can also be made sufficient while increasing the surface area of the rotor shaft to sufficiently secure the cooling capability of the kneading material. That is, the dispersion capability and the time efficiency during kneading, the cooling capability, and the kneading capacity can be made compatible with each other.

Still another characteristic configuration of the sealed kneading machine related to the invention lies in that a cooling unit that cools the rotor is provided inside the rotor.

According to the above characteristic configuration, the cooling unit that cools the rotor is provided inside the rotor. Thus, the cooling performance of the kneading material by the rotor can be further enhanced. In addition, the present characteristic configuration can be more easily implemented by the above-described configuration in which the diameter of the rotor shaft is 0.65 times or more the diameter of the inner face of the kneading tank.

Brief Description of Drawings

FIG. 1 is a top view of a sealed kneading machine.
FIG. 2 is an explanatory view of a section of the sealed kneading machine.
FIG. 3 is an explanatory view of a section of the sealed kneading machine.
FIG. 4 is a graph illustrating experimental results of Mooney viscosity.
FIG. 5 is a graph illustrating experimental results of volume resistivity.
FIG. 6 is a graph illustrating experimental results of unit work.
FIG. 7 is a graph illustrating experimental results of the volume resistivity.

Description of Embodiments

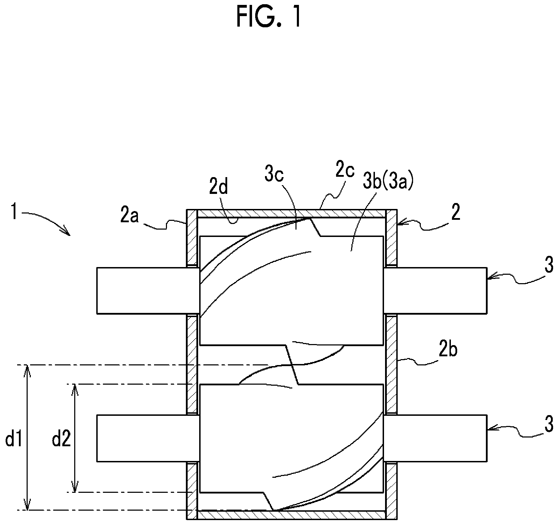

Hereinafter, a sealed kneading machine 1 will be described with reference to FIGS. 1 to 3. As illustrated in FIG. 1, the sealed kneading machine 1 includes a kneading tank 2 that stores a kneading material, and a pair of rotors 3 disposed inside the kneading tank 2.

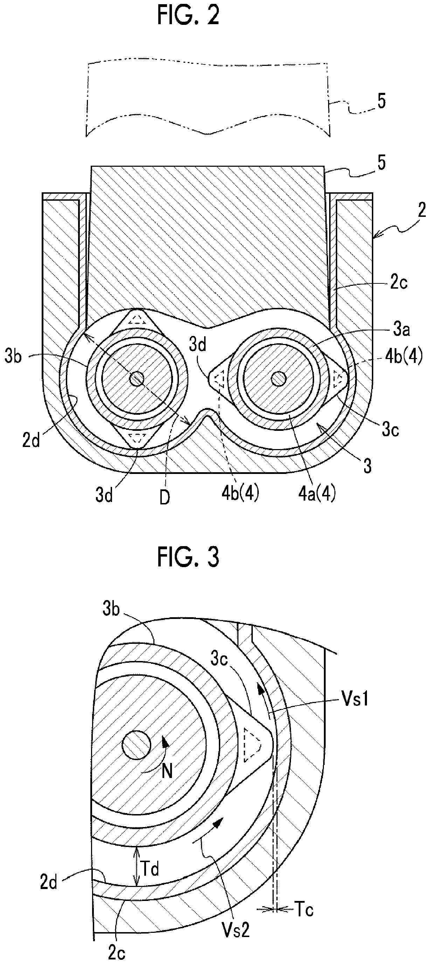

The kneading tank 2 is a tank-shaped member that stores the kneading material therein to knead the kneading material. The kneading tank 2 has a tubular wall part 2c that forms a side surface and a bottom surface, and side wall parts 2a and 2b that form other side surfaces. An upper part (upward direction in FIG. 2) of the kneading tank 2 is open, and a pressurizing lid 5 to be described below is inserted from above . An internal space of the kneading tank 2 is formed by being surrounded by the side wall parts 2a and 2b, the tubular wall part 2c, and the pressurizing lid 5.

The pressurizing lid 5 is disposed in an upwardly and downwardly movable state with respect to the kneading tank 2. The kneading material is input into the kneading tank 2 in a state where the pressurizing lid 5 is moved upward and the upper part of the kneading tank 2 is open (a position illustrated by a dotted line of FIG. 2). Thereafter, the kneading material is kneaded as the rotors 3 are rotated while the pressurizing lid 5 is moved downward (a position illustrated by a solid line of FIG. 2), and the input kneading material is pressurized from above.

The internal space of the kneading tank 2, as illustrated in FIG. 2, has a shape in which a pair of columns with parallel central axes are disposed in a state where portion of side surfaces of the columns overlap each other. The pair of rotors 3 is rotatably disposed inside the kneading tank 2 in a state where central axes of the rotors coincide with the central axes of the columns.

Each rotor 3 has a rotor shaft 3a and rotor vanes 3c spirally formed on a surface 3b of the rotor shaft 3a. The rotor vanes 3c are formed up to a substantial center of the rotor shaft 3a from end parts on both sides of the rotor shaft 3a toward the other end sides. The rotor vanes 3c are of a tangential type in which the rotor vanes do not overlap each other between the pair of rotors 3 that face each other.

The rotor 3 has a cooling unit 4 for cooling the rotor 3 therein. The cooling unit 4 has a rotor shaft internal flow passage 4a, and rotor vane internal flow passages 4b. The rotor shaft internal flow passage 4a is a cooling water flow formed near a surface of the rotor shaft 3a in parallel with the central axis of the rotor 3. The rotor vane internal flow passages 4b are cooling water flow passages formed inside the rotor vanes 3c. When the kneading material is kneaded in the sealed kneading machine 1, the kneading material receives an action, such as shearing or deformation, and generates heat. However, the rotor 3 is cooled by the above-described cooling unit 4, and the kneading material in contact with the rotor 3 is cooled.

The rotor 3 of the sealed kneading machine 1 is configured such that the value of a shear deformation velocity ratio R become 5 or more and 40 or less. The shear deformation velocity ratio R is defined as a value obtained by dividing a vane distal end shear deformation velocity Vs1 by a shaft surface shear deformation velocity Vs2 according to the following Formula.

$$R = Vs1/Vs2$$

The vane distal end shear deformation velocity Vs1 is defined as a value obtained by dividing a turning velocity of a distal end 3d of each rotor vane 3c by a distance Tc between a distal end 3d of the rotor vane 3c and an inner face 2d of the kneading tank 2. That is, the vane distal end shear deformation velocity Vs1 is expressed by the following Formula using an external diameter d1 (the diameter of the distal end 3d of the rotor vane 3c) of the rotor 3 and a rotating velocity N of the rotor 3.

$$Vs1 = \pi \times d1 \times N/Tc$$

In addition, the distance Tc is 1/2 of a difference between a diameter D of the inner face 2d of the cylindrical kneading tank 2, and the external diameter d1 of a rotor 3, and are expressed with the following formula.

$$Tc = (D - d1)/2$$

The shaft surface shear deformation velocity Vs2 is defined as a value obtained by dividing the turning velocity of the surface 3b of the rotor shaft 3a by a distance Td between the surface 3b of the rotor shaft 3a and the inner face 2d of the kneading tank 2. That is, the shaft surface shear deformation velocity Vs2 is expressed by the following Formula using a diameter d2 of the rotor shaft 3a and the rotating velocity N of the rotor 3.

$$Vs2 = \pi \times d2 \times N/Td$$

In addition, the distance Td is 1/2 of a difference between the diameter D of the inner face 2d of the cylindrical kneading tank 2, and the diameter d2 of the rotor shaft 3a, and is expressed by the following Formula.

$$Td = (D - d2)/2$$

By setting the value of the shear deformation velocity ratio R to 5 or more and 40 or less, the following experiment shows the dispersion capability and the time efficiency during kneading increase. The experiment was performed as follows. A kneading material for experiment was kneaded using four sealed kneading machines 1 (experimental examples 1 to 4) in which the dimensions of the kneading tank 2 and the rotor 3 are changed. The Mooney viscosity, the volume resistivity, and the unit work of the kneading material for experiment when kneading with a predetermined integrated number of rotations was performed was measured or calculated.

Regarding the values of the shear deformation velocity ratios R of Experimental Examples 1 to 4, R = 10.2 (Example 1) in Experimental Example 1, R = 16.7 (Example 2) in Experimental Example 2, R = 49.0 (Contrast Example 1) in Experimental Example 3, and R = 66.7 (Contrast Example 2) in Experimental Example 4.

As the kneading material for experiment, a mixture in which styrene-butadiene rubber (SBR), carbon black, stearic acid, oil, and zinc oxide are mixed together in a weight ratio of 100:50:1:5:5 is used.

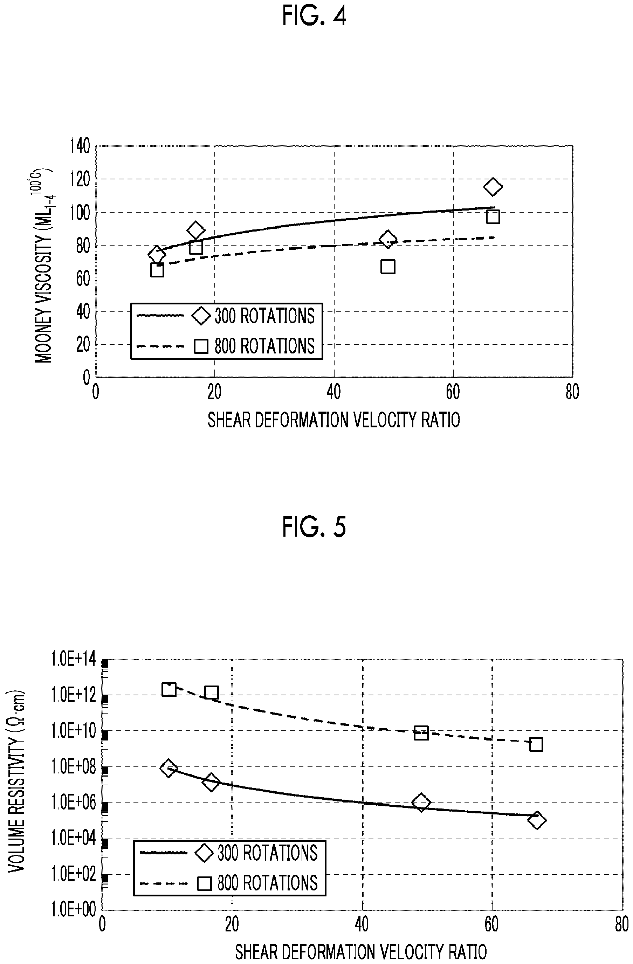

FIG. 4 is a graph obtained by taking the shear deformation velocity ratio R on a horizontal axis, taking the Mooney viscosity on a vertical axis, and plotting data of the integrated number of rotations: 300 rotations ($\diamond$ mark) and 800 rotations ($\triangle$ mark). A solid line and a dashed line are approximated curves obtained by power approximation of the data of the respective numbers of rotations.

It can be seen from the graph of FIG. 4 that the Mooney viscosity decreases as the shear deformation velocity ratio R is smaller. That is, if a comparison is made at the same number of rotations, the experimental results show that the kneading proceeds further as the shear deformation velocity ratio R is smaller, and the dispersion capability and the time efficiency during kneading increase as the shear deformation velocity ratio R is smaller.

FIG. 5 is a graph obtained by taking the shear deformation velocity ratio R on a horizontal axis, taking the volume resistivity on a vertical axis, and plotting data of the integrated number of rotations: 300 rotations ($\diamond$ mark) and 800 rotations ($\diamond$ mark). A solid line and a dashed line are approximated curves obtained by power approximation of the data of the respective numbers of rotations.

From the graph of FIG. 5, it can be seen that the volume resistivity increases as the shear deformation velocity ratio R is smaller. It is considered that an increase in the volume resistivity depends on carbon black having conductivity depends being finely dispersed in rubber having no conductivity in the kneading material for experiment. That is, if a comparison is made at the same number of rotations, the experimental results show that the kneading proceeds further as the shear deformation velocity ratio R is smaller, and the dispersion capability and the time efficiency during kneading increase as the shear deformation velocity ratio R is smaller. Particularly, if the shear deformation velocity ratio R is 40 or less, it is estimated that, when the integrated number of rotations is 300 rotations, the volume resistivity can exceed 1.0 x

$10^6$ $\Omega$·cm. Additionally, it is estimated that, when the integrated number of rotations is 800 rotations, the volume resistivity can exceed $1.0 \times 10^{10}$ $\Omega$·cm. Although there is a case where the target value of the volume resistivity is shown as a required specification in designing the sealed kneading machine 1, this is preferable in that it is possible to provide a kneading machine that rapidly reaches the required specification by setting the shear deformation velocity ratio R to 40 or less.

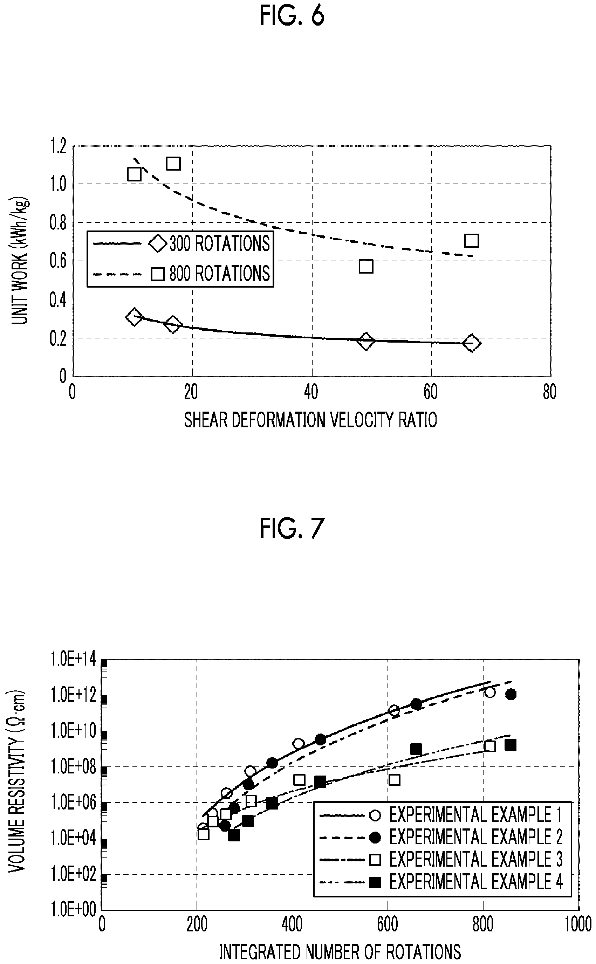

FIG. 6 is a graph obtained by taking the value of the unit work on a vertical axis, taking the shear deformation velocity ratio R on a horizontal axis, and plotting data of integrated number of rotations: 300 rotations ($\diamond$ mark) and 800 rotations ($\diamond$ mark) . A solid line and a dashed line are approximated curves obtained by power approximation of the data of the respective numbers of rotations.

From the graph of FIG. 6, it can be seen that the value of the unit work increases as the shear deformation velocity ratio R is smaller. The unit work is a value obtained by dividing integrated electric power consumption obtained by integrating the electrical power consumed in the sealed kneading machine 1 by the mass of the kneading material, and is a value showing energy per unit weight given to the kneading material. That is, if a comparison is made at the same number of rotations, more energy, that is, a kneading action is applied to the kneading material as the shear deformation velocity ratio R is smaller. Accordingly, it is considered that the dispersion capability and the time efficiency during kneading increase as the shear deformation velocity ratio R is smaller. Particularly, if the shear deformation velocity ratio R is 40 or less, it is estimated that, when the integrated number of rotations is 300 rotations, the value of the unit work can stably exceed 0.2 kWh/kg. Additionally, it is estimated that the value of the unit work when the integrated number of rotations is 800 rotations can stably exceed 0.7 kWh/kg. Although there is a case where the target value of the unit work is shown as a required specification in designing the sealed kneading machine 1, this is preferable in that it is possible to provide a kneading machine that rapidly reaches the required specification by setting the shear deformation velocity ratio R to 40 or less.

FIG. 7 is a graph obtained by taking the integrated number of rotations on a horizontal axis, taking the volume resistivity on a vertical axis, and plotting data of Experimental Examples 1 to 4. A solid line and a dashed line are approximated curves obtained by power approximation of the data of the respective experimental examples.

It can be seen from the graph of FIG. 7 that Experimental Examples 1 and 2 have a larger increasing rate (= inclination of graph) of the volume resistivity to the integrated number of rotations compared to Experimental Examples 3 and 4. Here, the shear deformation velocity ratios R of Experimental Examples 3 and 4 are 49.0 and 66.7, and the shear deformation velocity ratios R of Experimental Examples 1 and 2 are 10.2 and 16.7. Therefore, if a comparison is made at the same number of rotations, the experimental results show that the kneading proceeds further as the shear deformation velocity ratio R is smaller, and the dispersion capability and the time efficiency during kneading increase as the shear deformation velocity ratio R is smaller.

To further investigate, the increasing rate of the volume resistivity is decreasing as the integrated number of rotations increases.

Particularly, in Experimental Examples 3 and 4, the increasing rate becomes considerably small in the integrated number of rotations: 800 rotations. Thus, there is a high possibility that the volume resistivity does not exceed $1.0 \times 10^{10}$ $\Omega$·cm even if the kneading is continued more than this and the integrated number of rotations is increased. On the other hand, in Experimental Examples 1 and 2, when the integrated number of rotations is 800 rotations, the volume resistivity greatly exceeds $1.0 \times 10^{10}$ $\Omega$·cm and reaches $1.0 \times 10^{12}$ $\Omega$·cm.

In addition, in Experimental Examples 1 and 2, the increasing rate of the volume resistivity when the integrated number of rotations is 800 rotations is also large, and if the kneading is continued as it is, there is a high possibility that the volume resistivity exceeds $1.0 \times 10^{14}$ $\Omega$·cm. That is, in Experimental Examples 1 and 2, a high kneading state that cannot be realized in Experimental Examples 3 and 4 can be realized. Therefore, it is useful to set the shear deformation velocity ratio R to 40 or less as in Experimental Examples 1 and 2.

In addition, a lower limit of the shear deformation velocity ratio R is considered as follows. It can be understood that, since the shear deformation velocity ratio R is defined as the value obtained by dividing the vane distal end shear deformation velocity Vs1 by the shaft surface shear deformation velocity Vs2, the shear deformation velocity ratio R is a ratio of kneading (shear deformation force) in the distal end 3d of the rotor vane 3c and kneading (shear deformation force) in the surface 3b of the rotor shaft 3a. According to the above-described experimental results, Experimental Example 1 of the shear deformation velocity ratio R = 10.2 showed excellent kneading performance. However, if the shear deformation velocity ratio R is made excessively small, it can be estimated that suitable kneading is not performed. That is, in order to make the shear deformation velocity ratio R small, the following two cases can be considered. First, in a case where the distance Tc (the distance between the distal end 3d of the rotor vane 3c and the inner face 2d of the kneading tank 2) is enlarged with the value of the diameter d2 of the rotor shaft 3a being used as it is, a shearing action to be applied to the kneading material will decrease and dispersibility will decrease. Also, in a case where the diameter d2 of the rotor shaft 3a is enlarged with the value of the distance Tc used as it is, the kneading capacity decreases, and the biting property of the kneading material decreases, which is not suitable for practical use. Therefore, it is considered that the shear deformation velocity ratio R is preferably 5 or more.

In the actual design of the sealed kneading machine 1, the shear deformation velocity ratio R can be set to 5 or more and 40 or less by setting the external diameter d1 of the rotor 3 to 150 mm to 500 mm, setting the diameter d2 of the rotor shaft 3a to 100 mm to 400 mm, setting the diameter D of the internal space of the kneading tank 2 to 100 mm to 500 mm, setting the distance Tc between the distal end 3d of the rotor vane 3c and the inner face 2d of the kneading tank 2 to 1 mm to 8 mm, and setting the distance Td between the surface 3b of and the rotor shaft 3a and the inner face 2d of the kneading tank 2 to 15 mm to 90mm, and by selecting suitable values out of these numerical value ranges.

Particularly, as the sealed kneading machine 1 in which the volume of kneading particularly becomes 55 L, the shear deformation velocity ratio R can be set to 5 or more and 40 or less by setting the external diameter d1 of the rotor 3 to 370 mm to 390 mm, setting the diameter d2 of the rotor shaft 3a to 280 mm to 300 mm, setting the diameter D of the internal space of the kneading tank 2 380 mm to 400 mm, setting the distance Tc between the distal end 3d of the rotor vane 3c and the inner face 2d of the kneading tank 2 to 1 mm to 5 mm, and setting the distance Td between the surface 3b of the rotor shaft 3a and the inner face 2d of the kneading tank 2 to 40 mm to 60 mm, and by setting suitable values of these numerical value ranges.

<Other Embodiments>

In the above-described embodiment, the pair of rotors 3 is disposed inside the kneading tank 2 in a state where the central axes of the rotors 3 and the central axes of the columns that form the internal space of the kneading tank 2. In this case, the distance Td between the surface 3b of the rotor shaft 3a and the inner face 2d of the kneading tank 2, and the distance Tc between the distal end 3d of each rotor vane 3c and the inner face 2d of the kneading tank 2 are constant even if each rotor 3 rotates. The central axes of the rotors 3 and the central axes of the columns that form the internal space of the kneading tank 2 may be disposed to be slightly offset from each other. In this case, although the distance Tc and the distance Td vary depending on locations, the invention may be applied using the minimum values of Distance Tc and Distance Td.

Reference Signs List

    1: SEALED KNEADING MACHINE
    2: KNEADING TANK
    2d: INNER FACE
    3: ROTOR
    3a: ROTOR SHAFT
    3b: SURFACE

    3c: ROTOR VANE
    3d: DISTAL END
    4: COOLING UNIT
    R: SHEAR DEFORMATION VELOCITY RATIO
    Tc: DISTANCE (DISTANCE BETWEEN DISTAL END 3d OF ROTOR VANE 3c AND INNER FACE 2d OF kneading tank 2)
    Td: DISTANCE (DISTANCE BETWEEN SURFACE 3b OF ROTOR SHAFT 3a AND INNER FACE 2d OF kneading tank 2)
    Vs1: VANE DISTAL END SHEAR DEFORMATION VELOCITY
    Vs2: SHAFT SURFACE SHEAR DEFORMATION VELOCITY

**Claims**

1. A sealed kneading machine (1) comprising:

    a kneading tank (2) that stores a kneading material; and
    a pair of rotors (3) disposed within the kneading tank (2),
    wherein the rotor has a cylindrical rotor shaft (3a) and rotor vanes (3c) formed on a surface of the rotor shaft (3a), and the rotor vanes (3c) are of a tangential type in which the rotor vanes (3c) do not overlap each other between the pair of rotors (3) that face each other, and
    wherein the rotor vanes (3c) are configured to have a vane distal end shear deformation velocity (Vs1) at a distal end of each rotor vane when a kneading material is kneaded by rotating each rotor which is defined as a value obtained by dividing a turning velocity of the distal end of the rotor vane by a distance (Tc) between the distal end of the rotor vane and an inner face of the kneading tank (2),
    wherein the rotor shaft (3a) is configured to have a shaft surface shear deformation velocity (Vs2) on the surface of the rotor shaft (3a) which is defined as a value obtained by dividing a turning velocity of the surface of the rotor shaft (3a) by a distance (Td) between the surface of the rotor shaft (3a) and the inner face of the kneading tank (2),
    **characterized in that**
    the rotor is configured to have a shear deformation velocity ratio (R), which is a value obtained by dividing the vane distal end shear deformation velocity (Vs1) by the shaft surface shear deformation velocity (Vs2), and is 5.0 or more and 40 or less, and **in that**
    a diameter (d2) of the rotor shaft (3a) is 0.65 times or more and 0.80 times or less a diameter (d1) of the inner face of the kneading tank (2).

**2.** The sealed kneading machine (1) according to claim 1,
wherein a cooling unit (4) configured to cool the rotor is provided inside the rotor (3).

**Patentansprüche**

**1.** Abgedichtete Knetmaschine (1), umfassend:

einen Knetbehälter (2), der ein Knetmaterial enthält; und
ein Paar Rotoren (3), die innerhalb des Knetbehälters (2) angeordnet sind,
wobei der Rotor eine zylindrische Rotorwelle (3a) und Rotorblätter (3c), die an einer Oberfläche der Rotorwelle (3a) gebildet sind, umfasst, und die Rotorblätter (3c) von einem tangentialen Typ sind, bei dem die Rotorblätter (3c) zwischen dem Paar Rotoren (3), die einander zugewandt sind, einander nicht überlappen, und
wobei die Rotorblätter (3c) konfiguriert sind, eine distale Blattende-Scherdeformationsgeschwindigkeit (Vs1) an einem distalen Ende von jedem Rotorblatt aufzuweisen, wenn ein Knetmaterial durch Drehen jedes Rotors geknetet wird, welche als ein Wert definiert ist, der durch Dividieren einer Drehgeschwindigkeit des distalen Endes des Rotorblatts durch einen Abstand (Tc) zwischen dem distalen Ende des Rotorblatts und einer Innenfläche des Knetbehälters (2) erhalten wird,
wobei die Rotorwelle (3a) konfiguriert ist, eine Wellenoberfläche-Scherdeformationsgeschwindigkeit (Vs2) an der Oberfläche der Rotorwelle (3a) aufzuweisen, die als ein Wert definiert ist, der durch Dividieren einer Drehgeschwindigkeit der Oberfläche der Rotorwelle (3a) durch einen Abstand (Td) zwischen der Oberfläche der Rotorwelle (3a) und der Innenfläche des Knetbehälters (2) erhalten wird,
**dadurch gekennzeichnet, dass**
der Rotor konfiguriert ist, ein Scherdeformationsgeschwindigkeitsverhältnis (R) aufzuweisen, das ein Wert ist, der durch Dividieren der distalen Blattende-Scherdeformationsgeschwindigkeit (Vs1) durch die Wellenoberfläche-Scherdeformationsgeschwindigkeit (Vs2) erhalten wird, und der 5,0 oder mehr und 40 oder weniger beträgt, und
dass ein Durchmesser (d2) der Rotorwelle (3a) das 0,65-fache oder mehr und das 0,80-fache oder weniger eines Durchmessers (d1) der Innenfläche des Knetbehälters (2) beträgt.

**2.** Abgedichtete Knetmaschine (1) nach Anspruch 1, wobei eine Kühleinheit (4), die konfiguriert ist, den Rotor zu kühlen, im Inneren des Rotors (3) vorgesehen ist.

**Revendications**

**1.** Une machine de malaxage scellée (1) comprenant :

une cuve de malaxage (2) qui stocke un matériau de malaxage ; et
une paire de rotors (3) disposés à l'intérieur de la cuve de malaxage (2),
dans laquelle le rotor présente un arbre de rotor cylindrique (3a) et des pales de rotor (3c) formées sur une surface de l'arbre de rotor (3a), et les pales de rotor (3c) sont d'un type tangentiel dans lequel les aubes de rotor (3c) ne se chevauchent pas les unes les autres entre la paire de rotors (3) qui se font face, et
dans laquelle les pales de rotor (3c) sont conçues pour présenter une vitesse de déformation de cisaillement d'extrémité distale de pale (Vs1) à une extrémité distale de chaque pale de rotor lorsqu'un matériau de malaxage est malaxé par rotation de chaque rotor qui est définie comme une valeur obtenue en divisant une vitesse de rotation de l'extrémité distale de la pale de rotor par une distance (Tc) entre l'extrémité distale de la pale de rotor et une face intérieure de la cuve de malaxage (2),
dans laquelle l'arbre de rotor (3a) est conçu pour présenter une vitesse de déformation de cisaillement de surface d'arbre (Vs2) sur la surface de l'arbre de rotor (3a) qui est définie comme une valeur obtenue en divisant une vitesse de rotation de la surface de l'arbre de rotor (3a) par une distance (Td) entre la surface de l'arbre de rotor (3a) et la face intérieure de la cuve de malaxage (2),
**caractérisée en ce que** le rotor est conçu pour présenter un rapport de vitesse de déformation de cisaillement (R), qui est une valeur obtenue en divisant la vitesse de déformation de cisaillement d'extrémité distale de pale (Vs1) par la vitesse de déformation de cisaillement de surface d'arbre (Vs2), et est de 5,0 ou plus et de 40 ou moins, et **en ce que**
un diamètre (d2) de l'arbre de rotor (3a) est 0,65 fois ou plus et 0,80 fois ou moins un diamètre (d1) de la face intérieure de la cuve de malaxage (2).

**2.** La machine de malaxage scellée (1) selon la revendication 1,
dans laquelle une unité de refroidissement (4) conçue pour refroidir le rotor est prévue à l'intérieur du rotor (3).

# FIG. 1

## FIG. 2

## FIG. 3

## FIG. 4

## FIG. 5

## FIG. 6

## FIG. 7

**EP 3 321 053 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007130953 A
- JP 3574618 B
- EP 1352725 A1